# EUROPÄISCHE PATENTANMELDUNG

(11) **EP 4 678 383 A2**
(43) Veröffentlichungstag der Anmeldung: **14.01.2026**
(21) Anmeldenummer: 25219030.1
(22) Anmeldetag: 27.10.2022
(51) Int. Cl.: B29L 31/00

(54) **VERFAHREN UND VORRICHTUNG ZUM UMFORMEN VON KUNSTSTOFFVORFORMLINGEN ZU KUNSTSTOFFBEHÄLTNISSEN MIT VERLAUFSKURVENAUSWERTUNG**

(30) Priorität: 28.10.2021 DE 102021128204
(62) Teilanmeldung aus: 22204105.5
(71) Anmelder: Krones AG, 93073 Neutraubling (DE)
(72) Erfinder: Steiner, Andreas, 93073 Neutraubling (DE); Gerstenberg, Thomas, 93073 Neutraubling (DE); Olenberg, Philipp, 93073 Neutraubling (DE); Fischer, Simon, 93073 Neutraubling (DE); Kirchmayer, Sebastian, 93073 Neutraubling (DE)
(74) Vertreter: Bittner, Bernhard

(57) **Zusammenfassung**

Verfahren zum Umformen von Kunststoffvorformlingen zu Kunststoffbehältnissen wobei ein Kunststoffvorformling in eine Blasform eingebracht wird und durch Beaufschlagung mit einem fließfähigen Medium zu einem Kunststoffbehältnisse expandiert wird, wobei der Kunststoffvorformling mit wenigstens zwei unterschiedlichen Druckniveaus (P1, Pi, P2) beaufschlagt wird und wobei weiterhin bevorzugt in den Kunststoffvorformling ein stangenartiger Körper eingeführt wird, um den Kunststoffvorformling in seiner Längsrichtung (L) zu dehnen, wobei mittels einer Messeinrichtung während des Expansionsvorgangs eine Druckverlaufskurve und/oder eine Bewegungsverlaufskurve des stangenartigen Körpers bestimmt wird , dadurch gekennzeichnet, dass mittels einer Prozessoreinrichtung wenigstens eine der Kurven ausgewertet wird und wenigstens ein für den Verlauf charakteristischer Punkt oder Bereich dieser Verlaufskurve ermittelt wird.

## Beschreibung

Die vorliegende Erfindung bezieht sich auf ein Verfahren und eine Vorrichtung zum Umformen von Kunststoffvorformlingen zu Kunststoffbehältnissen. Derartige Verfahren und Vorrichtungen sind aus dem Stand der Technik seit langem bekannt. Dabei werden erwärmte Kunststoffvorformlinge in Blasformen eingegeben und mittels Druckluft oder auch direkt mittels des flüssigen Produkts zu Behältnissen expandiert bzw. aufgeblasen.

Für diesen Vorgang werden sehr viele Parameter eingestellt bzw. geregelt. So werden beispielsweise die Blasdrücke, mit denen der Kunststoffvorformling expandiert wird geregelt und/oder gesteuert, sowie auch eine Reckstangenbewegung, welche die Behältnisse in ihrer Längsrichtung dehnt. Insgesamt ist der Prozess dieser Expansion relativ komplex.

Daher ist man in jüngerer Zeit dazu übergegangen, entsprechende Messkurven beispielsweise Messkurven der Druckverhältnisse, Reckstangenbewegung oder auch die Reckkraft aufzuzeichnen und sie auszuwerten, um so genauere Erkenntnisse über den Blasformvorgang zu gewinnen. Derartige Verfahren sind aus dem internen Stand der Technik der Anmelderin bekannt. Allerdings ergibt sich hierbei das Problem, dass eine sehr hohe Datenmenge aufzunehmen ist, beispielsweise eine vollständige Messkurve des Blasdrucks und/oder der Reckstangenbewegung über einen Blasvorgang hinweg. Diese sehr hohen Datenmengen sind in der Praxis nicht mehr gut zu verarbeiten und insbesondere auch kaum mehr zu speichern oder auch zu übermitteln.

Der vorliegenden Erfindung liegt daher die Aufgabe zugrunde, eine derartige Auswertung durchzuführen, dabei jedoch die Datenmenge, die auszuwerten und/oder zu speichern ist, zu reduzieren. Diese Aufgabe wird erfindungsgemäß durch die Gegenstände der unabhängigen Patentansprüche erreicht.

Bei einem erfindungsgemäßen Verfahren zum Umformen von Kunststoffvorformlingen zu Kunststoffbehältnissen wird ein Kunststoffvorformling in eine Blasform eingebracht und durch Beaufschlagung mit einem fließfähigen und insbesondere gasförmigen Medium zu einem Kunststoffbehältnis expandiert. Dabei wird der Kunststoffvorformling mit wenigstens zwei unterschiedlichen Druckniveaus beaufschlagt und weiterhin wird bevorzugt in den Kunststoffvorformling ein stangenartiger Körper eingeführt, um den Kunststoffvorformling in seiner Längsrichtung zu dehnen. Weiterhin wird mittels mindestens einer Messeinrichtung während des Expansionsvorgangs eine Druckverlaufskurve und/oder eine Bewegungsverlaufskurve des stangenartigen Körpers und/oder ein Kraftverlauf, beispielsweise der Antriebseinrichtung, des stangenartigen Körpers bestimmt.

Erfindungsgemäß wird mittels einer Prozessoreinrichtung wenigstens eine der Kurven ausgewertet und wenigstens ein für den Verlauf charakteristischer Punkt oder charakteristischer Bereich dieser Verlaufskurve ermittelt.

Es wird also im Rahmen der Erfindung vorgeschlagen, dass nicht die vollständige Druckverlaufskurve weiter verwertet wird, sondern nur bestimmte charakteristische Bereiche und insbesondere Punkte dieser Druckverlaufskurve, wie unten genauer erwähnt beispielsweise Extremwerte oder Wendepunkte. Die Anmelderin hat festgestellt, dass zur Beurteilung einer Druckverlaufskurve nicht der gesamte Bereich ausschlaggebend ist, sondern charakteristische Punkte desselben.

Damit schlägt die Erfindung vor, eine Auswertung oder Analyse dieser Kurve vorzunehmen und nur bestimmte Bereiche letztlich abzuspeichern und/oder auszuwerten.

Bevorzugt werden diese charakteristischen Punkte bestimmten bei der Expansion ablaufenden Prozessen zugeordnet oder sind diesen zuordenbar.

Bevorzugt werden mittels einer mathematischen Auswertung der aufgezeichneten Blaskurven bzw. Druckverlaufskurven oder Bewegungsverlaufskurven (Druck, Reckweg, Reckkraft, Prozesszeit, Ventilschaltzeitpunkte und/oder Maschinenwinkel) markante Prozesspunkte ermittelt. Diese markanten Prozesspunkte können zum Zweck der Prozessregelung oder auch der predictive maintenance und der Ableitung von Abhängigkeiten im Prozess verwendet werden.

So kann beispielsweise eine bestimmte Anzahl an Prozesspunkten definiert werden. Vorteilhaft ist die Anzahl der Prozesspunkte größer als drei, bevorzugt größer als vier, bevorzugt größer als fünf, bevorzugt größer als sieben und besonders bevorzugt größer als zehn. Bei einem weiteren bevorzugten Verfahren ist die Anzahl dieser Prozesspunkte geringer als 50, bevorzugt geringer als 40, bevorzugt geringer als 30 und bevorzugt geringer als 25.

Ein Vorteil dieser Vorgehensweise besteht darin, dass keine Veränderungen an der jeweiligen Maschine vorgenommen werden müssen, sondern allenfalls Softwareanpassungen. Die erforderliche Datenmenge wird im Vergleich zum Abspeichern der Rohdaten um ein Vielfaches reduziert. Die gewählten Prozessdatenpunkte können für eine spätere Maschineneinstellung weiterverwendet werden und/oder auch für andere Maschinen an anderen Orten. Dies ist beispielsweise durch Speicherung der Daten in einer Cloud möglich.

Bevorzugt wird die Druckverlaufskurve und/oder die Bewegungsverlaufskurve in Abhängigkeit von der Zeit und/oder in Abhängigkeit von der Position einer Umformungsstation bzw. dem Ort des zu expandierenden Kunststoffvorformlings aufgenommen.

Besonders bevorzugt werden die Kunststoffvorformlinge mit einer Vielzahl von Umformungsstationen expandiert. Besonders bevorzugt sind diese Umfangstationen an einen bewegbaren und insbesondere drehbaren Träger angeordnet. Besonders bevorzugt werden die hier beschriebenen Druckverlaufskurven oder Bewegungsverlaufskurven für jede einzelne der Stationen aufgenommen. Besonders bevorzugt erfolgt die Auswertung, bezogen auf die einzelne Umformungsstation, sodass bevorzugt auch bestimmte Messkurven (und/oder die daraus abgeleiteten Prozesspunkte) einzelnen Umformungsstationen zugeordnet werden können.

Bevorzugt erfolgt die Blaskurvenaufzeichnung und die Blaskurvenauswertung in einer Steuerungseinrichtung des Blasmoduls bzw. der Umformungseinrichtung, d.h. in der sog. SBC (Control stretch blow moulding sequence). Es befinden sich daher an den einzelnen Umformungsstationen bevorzugt keine Steuerungseinrichtungen, sondern lediglich dezentrale Peripherien, die keine (Blas)Kurvenverläufe aufzeichnen.

Vorteilhaft wäre es allerdings auch denkbar, dass die Blaskurvenaufzeichnung und - auswertung direkt an den Umformungsstationen erfolgt und demnach, anders als oben beschrieben, nicht in der SBC.

Bei einem bevorzugten Verfahren ist dieser charakteristische Punkt oder Bereich aus einer Gruppe von Punkten oder Bereichen ausgewählt, welche Extrema oder Extrembereichen, d. h. Minima- oder Maximabereiche der Druckverlaufskurve und/oder der Bewegungsverlaufskurven, Wendepunkte oder Wendepunktbereiche der Druckverlaufskurve oder Bewegungsverlaufskurve und dergleichen enthält. Daneben können auch Punkte einer Messkurve ermittelt werden, in denen eine Steigung maximal und/oder minimal ist, also Extrema einer mathematischen Ableitung der Kurven.

Die Anmelderin hat festgestellt, dass gerade an solchen Bereichen an denen beispielsweise Maxima oder Minima oder auch Wendepunkte auftreten, besondere Schlüsse gezogen werden können, beispielsweise auf ein lokales Druckmaximum oder Druckminimum. Dieses kann beispielsweise dafür ausschlaggebend oder darauf hinweisend sein, dass etwa das expandierte Behältnis sich während des Expansionsvorgangs an der Wandung der Blasform anzulegen beginnt. Auch der Zeitpunkt, an dem bei einer Beaufschlagung des Kunststoffvorformlings mit Druckluft dessen Expansion beginnt, ist als charakteristischer Messpunkt der Messkurve erkennbar, insbesondere als lokales Maximum des Druckverlaufs.

Doch auch die Bewegungskurven der Reckstange weisen, wie unten genauer gezeigt, derartige charakteristische Punkte auf. Dabei ändert sich die Ist-Positionskurve der Reckstange zwischen den Streckblasvorgängen bevorzugt kaum und weicht auch nur geringfügig von der Soll-Kurve ab, die schon von vornherein feststeht und nicht erst aufgezeichnet werden muss, so dass an dieser bevorzugt auch die Sollkurve verwendet werden kann. Anstelle der Positionskurve kann bevorzugt auch eine Geschwindigkeitskurve verwendet werden. Da die Geschwindigkeitskurve die Ableitung der Positionskurve ist, wäre es dann nicht erforderlich einen Differenzenquotienten zu ermitteln. Bevorzugt wäre auch eine Auswertung eines Reckkraft-Verlaufs an dieser Stelle denkbar.

Einem weiteren bevorzugten Verfahren wird Kunststoffvorformling oder werden die Kunststoffvorformlinge während ihrer Expansion entlang eines vorgegebenen Transportpfads transportiert. Vorteilhaft handelt es sich hier um einen kreisförmigen oder kreissegmentförmigen Pfad. Besonders bevorzugt werden die Kunststoffvorformlinge mittels eines Blasrads transportiert. Besonders bevorzugt werden die Kunststoffvorformlinge gegen eine Blasform und/oder eine Innenwandung einer Blasform expandiert.

Bei einem weiteren bevorzugten Verfahren wird die Verlaufskurve in Abhängigkeit von der Zeit und/oder in Abhängigkeit von einer Position des Kunststoffvorformlings aufgenommen. So kann beispielsweise der gesamte Expansionsvorgang in einer Zeit oder einen Zeitraum beobachtet werden, oder aber in Abhängigkeit von einer Position der jeweiligen Umformungsstation während einer Drehung des Blasrads.

Bei einem bevorzugten Verfahren werden durch mathematische Verfahren aus den Druckverläufen die Prozesspunkte ermittelt, bei denen es sich insbesondere um entsprechende Wendepunkte, Maxima oder Minima der Druckverlaufskurve oder der Bewegungsverlaufskurve ermittelt. Hierzu werden, wie oben erwähnt, bevorzugt mathematische Verfahren, die an sich aus dem Stand der Technik bekannt sind, angewandt. Bevorzugt werden derartige Extremer oder Wendepunkte bestimmten Vorgängen des Blasformvorgangs zugeordnet.

Bei einem weiteren bevorzugten Verfahren wird die Druckverlaufskurve und/oder die Bewegungskurve mittels einer Kurvendiskussion und/oder mathematischen Verfahren der Kurvendiskussion ausgewertet. Bei einem bevorzugten Verfahren werden Differenzenquotienten gebildet, insbesondere um auf Extrema und Wendepunkte zu schließen. Bei einem weiteren bevorzugten Verfahren werden Glättungsverfahren durchgeführt und/oder auf die sich ergebenden Druckverlaufskurven oder Bewegungsverlaufskurven angewandt. Bei einem bevorzugten Verfahren wird zunächst eine Glättung wenigstens einer der Verlaufskurven durchgeführt. Bevorzugt werden im Anschluss mathematische Verfahren zur Extremwertbestimmung und Wendepunktbestimmung durchgeführt.

Bei einem weiteren bevorzugten Verfahren werden Schwellwertberechnungsverfahren durchgeführt. Bei einem weiteren bevorzugten Verfahren werden mathematische Methoden zur Extremwertbestimmung und Wendepunktbestimmungen angewandt und insbesondere Methoden, welche aus einer Gruppe von Methoden ausgewählt sind, welche die h-Methode, das Newtonverfahren den Mittelwertsatz und dergleichen beinhalten.

Bei einem weiteren bevorzugten Verfahren wird eine Vielzahl von Kunststoffvorformlingen mittels einer Vielzahl von Umformungsstation zu den Kunststoffbehältnissen umgeformt und zu jeder dieser Umformungsstation wird wenigstens ein charakteristischer Punkt und bevorzugt eine Vielzahl von charakteristischen Punkten und/oder Bereichen bestimmt.

Bevorzugt wird für jede Umformungsstation eine Vielzahl von Verlaufskurven aufgenommen. Aus diesen Verlaufskurven können wiederum die oben genannten Prozesspunkte ermittelt werden. Dabei wäre es möglich, dass im weiteren Verfahren Mittelungen über diese Prozesspunkte vorgenommen werden. Auch wäre es möglich, ein Verändern der Lagen dieser Prozesspunkte über einen längeren Zeitraum hinweg zu beobachten.

Der Begriff Verlaufskurven bezeichnet einerseits die Druckverlaufskurven und andererseits die Bewegungsverlaufskurve der Reckstange.

Es werden also für alle Messkurven diese charakteristischen Punkte oder Bereiche bestimmt und/oder ausgewertet. Besonders bevorzugt wird unter Berücksichtigung dieser Werte und Bereiche jede Umformungsstation individuell gesteuert. So werden bevorzugt unter Berücksichtigung dieser Punkte Schaltzeitpunkte für Ventile gesteuert oder auch die Antriebe der Reckstangen gesteuert.

Dabei kann beispielsweise eine Zeitsteuerung der Umformungsstation beispielsweise der einzelnen Ventile, welche den Blasformvorgang steuern, vorgenommen werden. Es wäre jedoch auch eine vom einem Drehwinkel oder einer Position der Umformungsstation abhängige Steuerung möglich.

Bei einem bevorzugten Verfahren werden n-Tupel aus mehreren charakteristischen Punkten (insbesondere einer bestimmten Umformungsstation) gebildet und diese n-Tupel werden bevorzugt in einer Speichereinrichtung und/oder einer Cloud abgespeichert. So können beispielsweise für eine Messkurve fünf verschiedene Messpunkte abgespeichert werden, insbesondere mit einer zeitlichen Zuordnung und/oder einer Zuordnung zu einer Position der betreffenden Umformungsstation. Weiterhin kann diesem n-Tupel ein Wert zugeordnet werden, der für die bestimmte Umformungsstation charakteristisch ist. Diese n-Tupel nehmen wesentlich weniger Speicherkapazitäten in Anspruch, als eine vollständige Messkurve und sind entsprechend auch leichter zu übertragen. Die Variable n ist dabei eine natürliche Zahl zwischen 1 und 50, bevorzugt zwischen 2 und 50, bevorzugt zwischen 3 und 40 und bevorzugt zwischen 4 und 30.

Bei einem bevorzugten Verfahren wird die Druckbeaufschlagung der Behältnisse mittels wenigstens einer steuerbaren Ventileinrichtung gesteuert und bevorzugt wird diese Ventileinrichtung unter Berücksichtigung der ermittelten Punkte und/oder Bereiche gesteuert. Bevorzugt werden allgemein auf Basis dieser Werte Blasparameter angesteuert und/oder verändert. Bevorzugt werden mehrere Ventileinrichtungen einer Umformungsstation entsprechend der ermittelten Punkte angesteuert. Bevorzugt handelt es sich bei der steuerbaren Ventileinrichtung um ein Proportionalventil.

Bei einem weiteren bevorzugten Verfahren werden mit jedem Prozesspunkt oder Prozessbereich Daten verknüpft. Dabei kann es sich, wie oben erwähnt beispielsweise um Daten handeln, welche einen Rückschluss auf die betreffende Umformungsstation ermöglichen oder auch einen Rückschluss auf entsprechende verwendete Blasparameter.

Bevorzugt sind die charakterisierenden Daten aus einer Gruppe von Daten ausgewählt, welche eine Gültigkeit des Punktes, einen Zeitpunkt zu dem der Punkt aufgenommen wurde, einen Druck an diesem Prozesspunkt, eine Position der Reckstange an diesem Prozesspunkt, eine Kraft einer Antriebseinrichtung einer Reckstange an diesem Prozesspunkt und/oder eine Verzögerungszeit einer Ventilansteuerung enthält.

Bevorzugt werden alle diese Werte berücksichtigt. So wird beispielsweise ein 5-Tupel von Werten aufgenommen, aus den Werten Gültigkeitszeitpunkt, Druck, Reckstangenposition und Verzögerungszeit (an dem betreffenden Prozesspunkt).

Bei einem weiteren bevorzugten Verfahren wird eine Auswertung der Punkte oder Bereiche aufgenommen bzw. vorgenommen. Dabei können unterschiedliche Ursachen gegeben sein oder ermittelt werden, wie etwa eine Schaltverzögerung, eine Zusammensetzung der Kunststoffvorformlinge oder dergleichen.

Bei einem weiteren bevorzugten Verfahren wird zur Auswertung der Bereiche eine künstliche Intelligenz verwendet. So ist es möglich, dass große Mengen an Daten aufgenommen werden, beispielsweise auch für eine bestimmte Umformungsstation eine große Menge an Daten aufgenommen wird und diese Datenmenge abgespeichert wird und auf Basis einer Auswertung dieser Datenmenge die entsprechende Umformungsstation ausgewertet wird. So kann auf Basis dieser Werte ein zukünftiges Verhalten einer betreffenden Umformungsstation prognostiziert werden.

Die vorliegende Erfindung ist weiterhin auf eine Vorrichtung zum Umformen von Kunststoffvorformlingen zu Kunststoffbehältnissen gerichtet, welche wenigstens eine Umformungsstation aufweist, welche bevorzugt eine Blasform aufweist, in welcher der Kunststoffvorformling einbringbar ist sowie eine Beaufschlagungseinrichtung, welche den Kunststoffvorformling mit einem fließfähigen und insbesondere gasförmigen Medium beaufschlagt, wobei der Kunststoffvorformling mit wenigstens zwei unterschiedlichen Druckniveaus beaufschlagt wird und wobei die Vorrichtung weiterhin bevorzugt einen in den Kunststoffvorformling einführbaren stangenartigen Körper (insbesondere eine sogenannte Reckstange) aufweist, um den Kunststoffvorformling in seiner Längsrichtung zu dehnen. Weiterhin werden mittels einer Messeinrichtung während des Expansionsvorgangs eine Druckverlaufskurve und/oder eine Bewegungsverlaufskurve stangenartigen Körpers und/oder ein Kraftverlauf, beispielsweise einer Antriebseinrichtung, des stangenartigen Körpers bestimmt. Bevorzugt ist daher der Umformungsstation und bevorzugt jeder Umformungsstation eine Messeinrichtung und bevorzugt eine Druckmesseinrichtung zugeordnet. Bevorzugt kann die Bewegungskurve auch ohne separate Messeinrichtungen (bspw. Druckmesseinrichtung) bestimmt werden, wobei insbesondere statt einer Aufzeichnung auch das Soll-Profil verwendet werden kann.

Erfindungsgemäß weist die Vorrichtung eine Prozessoreinrichtung auf, welche dazu geeignet und bestimmt ist, wenigstens eine dieser Verlaufskurven auszuwerten und wenigstens einen für den Verlauf charakteristischen Punkt oder Bereich dieser Verlaufskurve zu ermitteln.

Bevorzugt weist die Umformungsstation eine Bewegungseinrichtung, bevorzugt einen Elektromotor auf, um die Reckstange zu bewegen. Bei einer bevorzugten Ausführungsform weist wenigstens eine und weisen bevorzugt alle Umformungsstationen jeweils Positionserfassungseinrichtungen auf, welche zum Erfassen einer Position der stangenartigen Körper (die bevorzugt in der Längsrichtung der Kunststoffvorformlinge bewegbar sind) zu erfassen.

Bei einer weiteren bevorzugten Ausführungsform weist die Vorrichtung eine Transporteinrichtung auf, welche die Kunststoffvorformlinge während ihrer Expansion transportiert. Besonders bevorzugt handelt es sich hierbei um ein sogenanntes Blasrad, an dem wenigstens eine und bevorzugt eine Vielzahl von Umformungsstationen angeordnet ist. Besonders bevorzugt weisen diese Umformungsstationen hier jeweils öffnen- und schließbare Blasformen auf. Bei der weiteren bevorzugten Ausführungsform weisen diese Umformungsstation jeweils eine Reckstange auf, welche in die Kunststoffvorformlinge einführbar ist, um diese in ihrer Längsrichtung zu dehnen.

Bevorzugt weist die Vorrichtung eine Positionserfassungseinrichtung auf, welche dazu geeignet und bestimmt ist, eine Position der Umformungsstation zu erfassen. Bevorzugt weist die Vorrichtung eine Zeiterfassungseinrichtung und/oder eine Zeitgebereinrichtung auf, um die (relativen oder absoluten) Zeitpunkte von charakteristischen Punkten oder Prozesspunkten zu erfassen.

Bei einer weiteren bevorzugten Ausführungsform weist jede Umformungsstation wenigstens eine Ventileinrichtung und bevorzugt eine Vielzahl von Ventileinrichtungen auf. Bevorzugt weist die Vorrichtung auch eine Speichereinrichtung zum Speichern von Druckluft auf, wobei sich bei dieser Speichereinrichtung insbesondere um einen Ringkanal und insbesondere um einen an dem Blasrad montierten Ringkanal handelt.

Bei einer weiteren vorteilhaften Ausführungsform weist die Vorrichtung eine Speichereinrichtung und/oder ein Cloud auf, welche dazu geeignet und bestimmt ist, eine Vielzahl von charakteristischen Punkten insbesondere gemeinsam mit für diese charakteristischen Daten abzuspeichern.

Bei der weiteren bevorzugten Ausführungsform weist die Vorrichtung eine Vielzahl von Umformungsstationen auf. Bevorzugt ist jeder dieser Umformungsstationen wenigstens eine Messeinrichtung zugeordnet und insbesondere eine Druckmesseinrichtung.

Bevorzugt sind die Prozesspunkte auch den einzelnen Umformungsstationen zuordenbar. Bevorzugt ist weiterhin eine Auswerteeinrichtung vorgesehen, welche Punkte-Tupel auswertet und besonders bevorzugt auch eine Steuereinrichtung, welche die Umformungsstationen und beispielsweise die oben genannten Ventile der Umformungsstationen und/oder die Antriebseinrichtungen der stangenartigen Körper entsprechend ansteuert.

Bei einem weiteren bevorzugten Verfahren wird zunächst die Blasdruckkurve (bzw. Druckverlaufskurve) und/oder die Bewegungs(verlaufs)kurve mittels wenigstens eines Auswerteverfahrens und bevorzugt mittels verschiedener Auswerteverfahren und den zugehörigen Parametern ausgewertet. In einem weiteren Schritt werden definierte Punkte oder Bereiche (POl, Point of Interest) ermittelt.

In einem weiteren Verfahrensschritt werden die genannten Punkte in ein Dateimanagementsystem übergeben. Bei einem bevorzugten Verfahren erfolgt noch eine nachgeschaltete Auswertung der erfassten Daten. Dabei ist es möglich, einzelne Punkte hinsichtlich ihrer Relevanz und/oder Plausibilität zu prüfen.

Bevorzugt sind die relevanten Punkte hinsichtlich der Blasdruckkurve bzw. Druckverlaufskurve aus einer Gruppe von Punkten ausgewählt, welche Beginn des ersten Blasdrucks, einen Wendepunkt der Druckverlaufskurve während der Beaufschlagung mit dem ersten Blasdruck, einen zweiten Wendepunkt der Druckverlaufskurve, der beispielsweise dafür charakteristisch ist, dass das Material des Vorformlings an der Vorwand der Blasform angelegt ist, einen Beginn eines PI-Drucks (erstes Zwischenblasen), einen Beginn eines Pl+ - Drucks (zweites Zwischenblasen), einen Beginn der Beaufschlagung mit dem Druck P2, den maximalen Druck P2, dass Ende der Beaufschlagung mit dem Druck P2, dass Ende der HPZ [High pressure zone], den Beginn des Recycelns des Pl+ - Drucks, den Beginn des Recyclings des PI - Drucks, den Beginn des Recyclings des P1-Drucks, den Start eines externen Recyclings, den Start eines Exhausts (Entlasten des Drucks) und gegebenenfalls ein Ende des Exhausts.

Hinsichtlich der Bewegung der Reckstange können ebenfalls mehrere Punkte definiert werden. So kann ein Punkt definiert werden, an dem die Reckstange beginnt nach unten zu fahren. Weiterhin kann ein Punkt definiert werden, an dem die Reckstange beginnt sich an den Kunststoffvorformling anzulegen. Weiterhin kann ein Punkt definiert werden, ab dem die Reckstange sich an den Boden der Blasform anlegt. Weiterhin kann ein Punkt definiert werden, ab dem die Reckstange wieder nach oben fährt. Schließlich kann ein Punkt definiert werden, an dem die Reckstange wieder ihre obere Stellung erreicht hat.

Wie erwähnt, wird bevorzugt nach Prozesspunkten durch die Bildung von Differenzen Quotienten gesucht. So kann beispielsweise eine Ableitung mittels Differenzenquotienten gebildet werden.

Weiterhin kann eine Glättung mittels Bildung eines Medians über n-Werte, beispielsweise über 6-Werte erfolgen.

Bevorzugt erfolgt weiterhin eine Berechnung von Vergleichswerten mittels Spangen (S-Spange).

Dabei kann eine Überschreitung einer Schwelle bzw. S-Schwelle (mit Ventilschaltzeitpunkt Bis +40 x Zeiteinheit (beispielsweise 1,6 ms)) ermittelt werden.

Bevorzugt erfolgt dann die Auswahl eines Punktes oder Bereichs mit der Hälfte dieser gebildeten Spange.

Bevorzugt kann hinter der Array-Nummer anschließend die Prozesszeit, der Druck, die Reckstangenposition und als Differenz der Ansteuerung und der Prozesszeit die Schaltzeitverzögerung ermittelt werden.

Weitere Vorteile und Ausführungsformen ergeben sich aus den beigefügten Figuren:
Darin zeigen:
- Fig. 1: eine Gesamtdarstellung eines Druckkurvenverlaufs und eines Reckstangen Verlaufs;
- Fig. 2: eine Detaildarstellung einer Messkurve;
- Fig. 3a, 3b: zwei Detaildarstellungen von Messkurven;
- Fig. 4a, 4b: zwei Detaildarstellung von Messkurven;
- Fig. 5a - 5d: vier Detaildarstellungen von Messkurven;
- Fig. 6a - 6d: vier Detaildarstellungen von Messkurven;
- Fig. 7a, 7b: zwei Darstellungen von Gesamtverläufen;
- Fig. 8a - 8d: vier Darstellungen von Messkurven;
- Fig. 9a - 9e: fünf Darstellungen von Messkurven;
- Fig. 10: eine schematische Darstellung einer erfindungsgemäßen Vorrichtung; und
- Fig. 11: eine schematische Darstellung zur Verdeutlichung der Aufgaben der Steuerungseinrichtung.

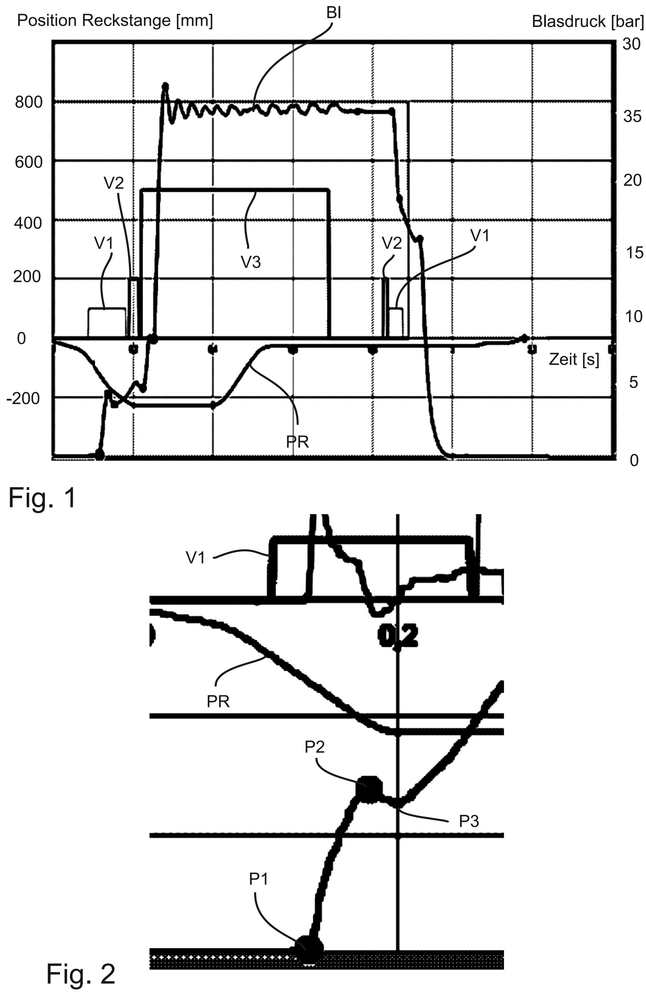

Figur 1 zeigt eine Darstellung mehrerer Messkurven. Dabei bezieht sich das Bezugszeichen BL auf eine (Blas)druckverlaufskurve. Auf der linken Koordinate ist die Reckstangenposition in Millimetern aufgetragen und auf der rechten Koordinate Blasdrücke in bar. Auf der Ordinate ist die Zeit in Sekunden aufgetragen.

Das Bezugszeichen PR kennzeichnet eine Position der Reckstange bzw. die oben erwähnte Bewegungsverlaufskurve. Die Bezugszeichen V1 bis V3 kennzeichnen die Schaltstellungen von drei (Blas)Ventilen. Dabei zeigen die linken beiden Bezugszeichenzeichen V1, V2 das Öffnen der Ventile zum Beaufschlagen des Vorformlings mit Druckluft und die rechten beiden Bezugszeichen V1, V2 das Öffnen der Ventile zum Zwecke des Recycelns (von Blasluft).

Figur 2 veranschaulicht die Ermittlung eines ersten Prozesspunktes P1 Start, d. h. des Punktes, an dem die Beaufschlagung der Kunststoffvorformlinge mit dem ersten Druck P1 beginnt. Man erkennt, dass das Ventil V1 zu einem etwas früheren Zeitpunkt geschalten wird. Vorteilhaft wird der Punkt P1 mittels eines Differenzen-Quotienten-Verfahrens ermittelt. Durch die Ermittlung oder Angabe des Punktes P1 kann die Ventilverzögerungszeit des ersten Ventils V1 ermittelt werden. Daneben können aber auch Prozesswerte und Prozesserfahrungen durch diesen Punkt gesammelt werden.

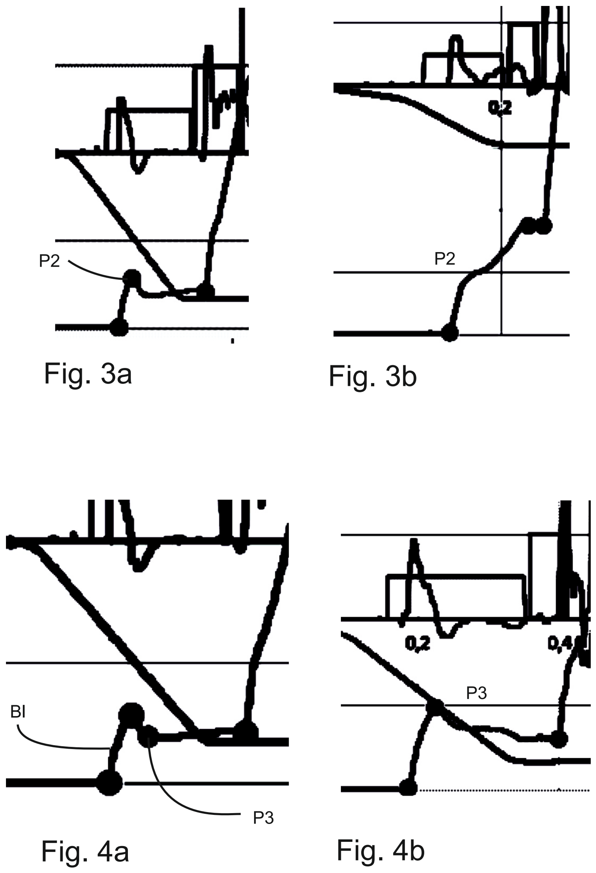

Figur 3a kennzeichnet die Ermittlung eines zweiten Prozesspunktes P2, der ein lokales Maximum darstellt. Dabei ist es möglich, den ersten 0-Durchgang in dem Differenzenquotienten (der Ableitung) und damit nach P2 zu suchen. Vorteilhaft wird hier eine zusätzliche Medianglättung vorgenommen.

Der Punkt P2 definiert den Punkt, an dem der Kunststoffvorformling zu fließen beginnt, d. h. beginnt sich tatsächlich zu expandieren. Figur 3b zeigt einen Problemfall bei der Ermittlung des Punktes P2. In diesem Fall ist es möglich einen Bereich anzugeben oder einen Bereich einzuschränken, in dem dieser Punkt zu finden ist (beispielsweise in dem Bereich durch eine bestimmte maximale Steigung begrenzt wird. Auch wäre es möglich, diesen Punkt abzuschätzen bzw. einen Bereich von Punkten anzugeben. Auch könnte als Punkt die Mitte dieses Bereichs angegeben werden.

Der Punkt P3 (vgl. Fig. 4a und 4b) kennzeichnet ein lokales Minimum. Dabei wird der zweite 0-Durchgang im Differenzenquotienten (der Ableitung) nach P1 gesucht, wobei auch hier zusätzlich eine Medianglättung erfolgen kann. Dieser Punkt P3 definiert den Punkt, an denen der Kunststoffvorformling an der Blasform anliegt und entsprechend der Druck in der Form wieder ansteigt.

Auch diese Punkte P2 und P3 dienen zur Einstellung von Blasparametern sowie auch dazu, um Prozesserfahrung zu sammeln.

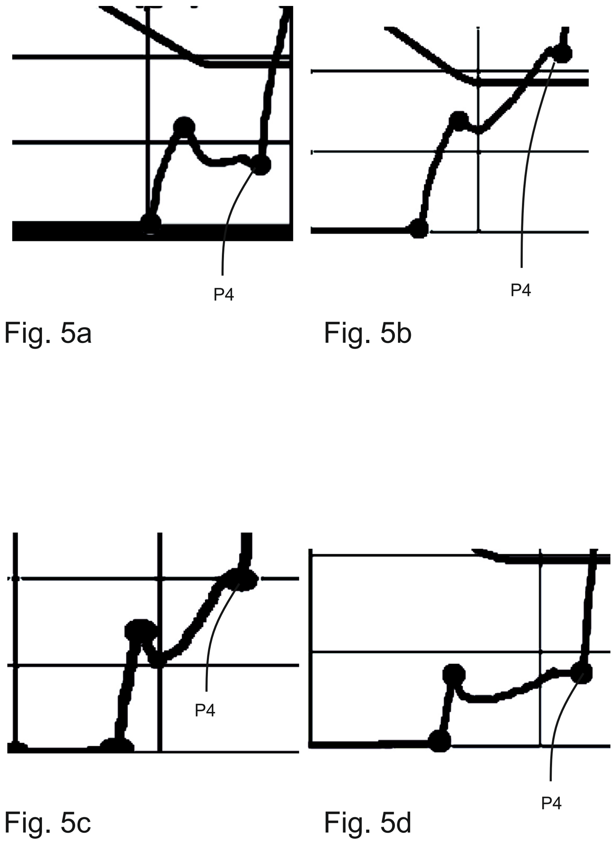

Die Figuren 5a bis 5d zeigen die Ermittlung eines weiteren Prozesspunktes P4 (hier die Erkennung des Startpunkts mit der Druckbeaufschlagung durch den Druck PI). Auch dieser kann wiederum mittels eines Differenzen-Quotienten-Verfahrens ermittelt werden. Auf diese Weise kann der Beginn der Beaufschlagung mit einem zweiten Druck PI erfasst werden. Auch hier ist es wiederum möglich, eine Ventilverzögerungszeit zu ermitteln. Auch können so die Blasparameter eingestellt werden und es können wiederum Prozesswerte und Prozesserfahrung gesammelt werden. Bevorzugt kann mit dieser Vorgehensweise eine Überströmsicherheit von PI zu P1 reduziert werden.

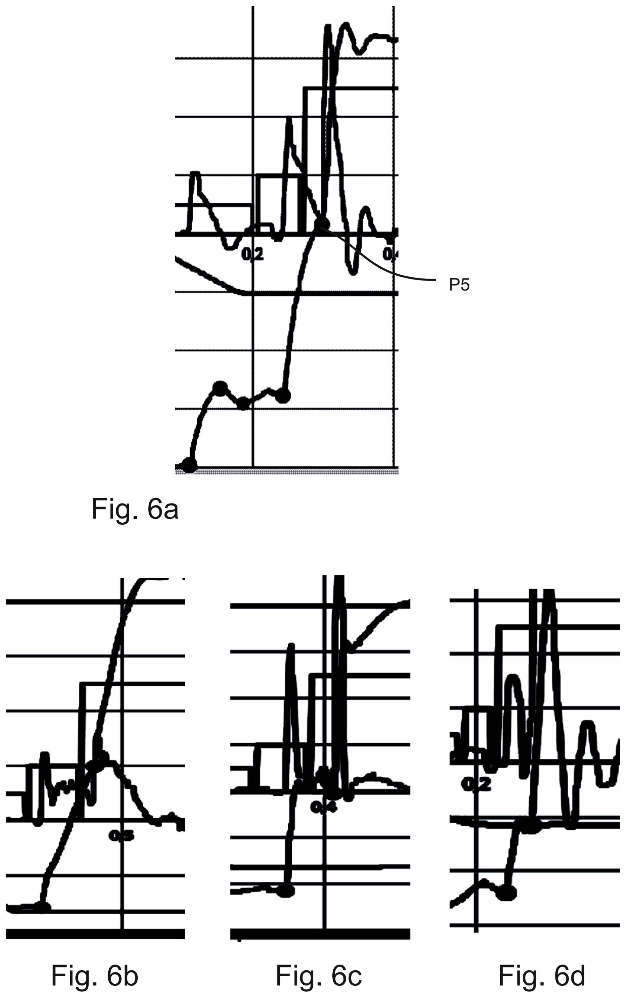

Figur 6a zeigt die Erfassung eines weiteren relevanten Punktes P5 (hier die Erkennung des Beginns mit der Beaufschlagung mit dem Druckniveau PI plus). Auch dies kann wiederum durch ein Differenzen-Quotienten-Verfahren erfolgen. Auch auf diese Weise ist eine Ermittlung der Ventilverzögerungszeit möglich, sowie auch eine Einstellung der Blasparametern. Die Figuren 6b, 6c und 6d zeigen jeweils Problemsituationen, bei denen die Auswertung der Messkurven sich schwierig gestaltet und gegebenenfalls auch wiederum Bereiche identifiziert werden müssen.

Bei einem weiteren bevorzugten Verfahren wird ein erstes lokales Maximum des Drucks gesucht. Dabei ist es möglich, dass eine Suche eingeschränkt wird auf beispielsweise den Bereich, an dem 95 % eines bestimmten Drucks wie etwa des Ringkanaldrucks des maximalen Drucks P2 erreicht sind. Anschließend kann ein lokales Maximum der Druckkurve gesucht werden. Aufgrund dieses Punktes kann die Abkühlzeit erfasst werden, d. h. die Situation, in der die bereits expandierte Flasche an der Blasform komplett anliegt. Auch kann die gesamte Druckanstiegszeit ermittelt werden.

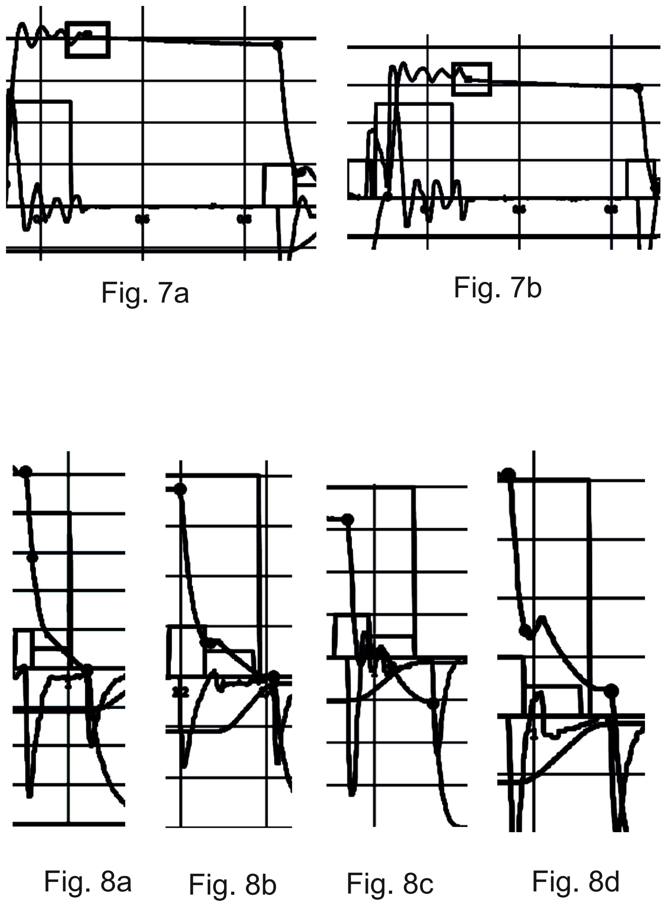

Die Figur 7a und 7b zeigen die Ermittlung des Punktes, an dem das P2 Ventil schließt. Dabei kann eine bestimmte Zeit der Ventilverzögerung hinzugefügt werden, beispielsweise 60 ms (zwei Mal die durchschnittliche Ventilverzögerung). Durch diesen Punkt, der in Figur 7b gezeigt ist, können Undichtigkeiten bei zu großem Druckabfall bei einem geschlossenen P2 Ventil ermittelt werden.

Die Figuren 8a bis 8d zeigen die Erfassung relevanter Punkte für den Beginn des Recyclings von Blasluft. Auch hier kann wiederum die Suche mittels Differenzen-Quotienten-Verfahrens erfolgen. Diese Prozesspunkte können beispielsweise bei der Verwendung zur Reduzierung von Luftverbrauch eingesetzt werden oder auch bei der Einstellung kürzerer Prozesszeiten.

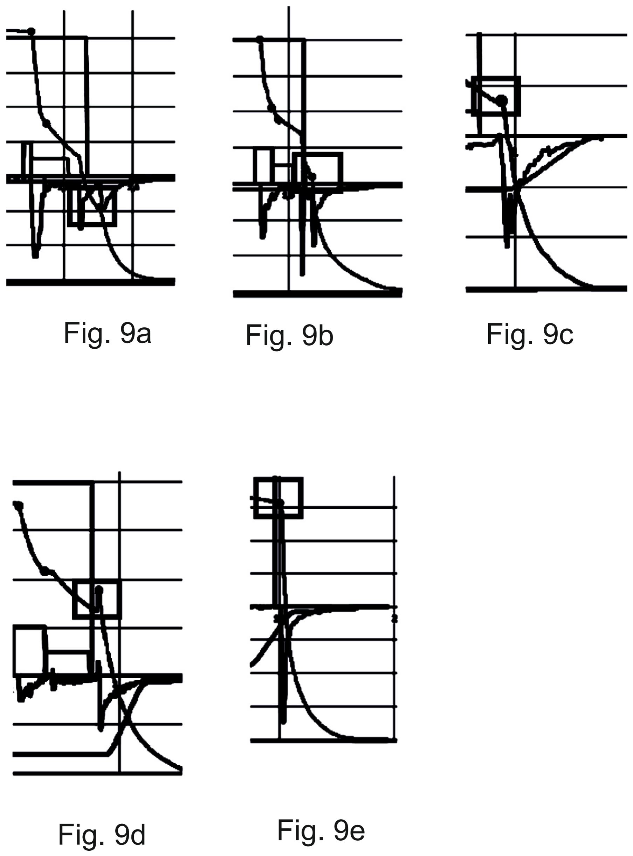

Die Figuren 9a bis 9e zeigen fünf Darstellungen von Messkurven, bei denen der Beginn des Luftauslassprozesses aus dem Behältnis ermittelt wird. Auch hier können die jeweiligen Prozesspunkte mittels Differenzen-Quotienten-Verfahren ermittelt werden.

Die nachfolgende Tabelle zeigt relevante Punkte der Druckverlaufskurve und ggfs deren Bedeutung:

| Prozesspunkte Druckverlaufskurve | Bedeutung bzw. Physikalische Bedeutung |
|---|---|
| P1 Beginn 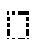 | Auswirkung der Öffnung des P1 Ventils für den Vorblasdruck |
| P1 Wendepunkt 1 | Der Kunststoff des Kunststoffvorformlings beginnt zu fließen bzw. der Kunststoffvorformling beginnt sich auszudehnen |
| P1 Wendepunkt 2 ( | Der Kunststoffvorformling bzw. dessen Material liegt an der Innenwandung der Blasform an |
| PI Beginn _{*1} | Auswirkung der Öffnung des PI Ventils auf den Druckverlauf |
| PI Plus Beginn _{*1} | Auswirkung der Öffnung des PI plus Ventils auf den Druckverlauf |
| P2 Beginn _{*1} | Auswirkung der Öffnung des P2 Ventils auf den Druckverlauf |
| P2 Max _{*3} | |
| P2 Ende _{*4} | Auswirkung des Schließens des P2 - Ventils für |
| HPZ Ende _{*1} | |
| PI Plus Recycling Start | Auswirkung des Öffnens des PI Plus Ventils zum Druckluftrecyclen |
| PI Recycling Start _{*1} | Auswirkung des Öffnens des PI Ventils zum Druckluftrecyclen |
| P1 Recycling Start _{*1} | Auswirkung des Öffnens des P1 Ventils zum Druckluftrecyclen |
| Extern Recycling Start | |
| Exhaust Start _{*1} | Auswirkung des Öffnens des Auslassventils |
| Exhaust Ende? | Auswirkung des Schließens des Auslassventils |

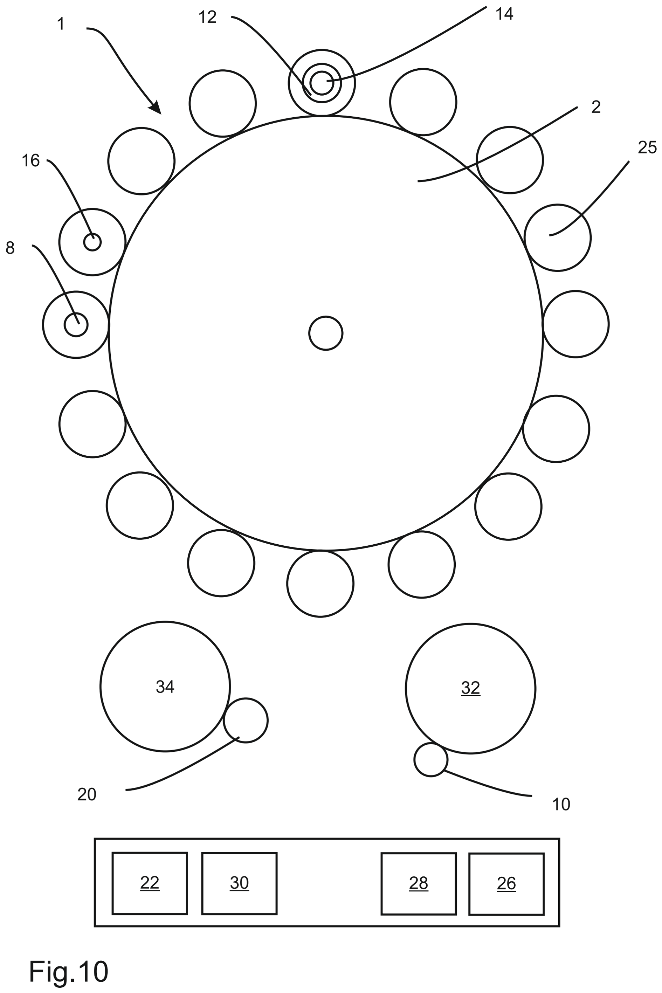

Fig. 10 zeigt eine grob schematische Darstellung einer erfindungsgemäßen Vorrichtung 1 zum Umformen von Kunststoffvorformlingen 10 zu Kunststoffbehältnissen und insbesondere Kunststoffflaschen 20. Insbesondere handelt es sich bei der Vorrichtung um eine Streckblasmaschine. Das Bezugszeichen 2 kennzeichnet dabei eine Transporteinrichtung wie ein sog. Blasrad, an dem eine Vielzahl von Umformungsstationen 25 angeordnet sind. Diese Umformungsstationen sind dabei bevorzugt jeweils in der gleichen Art gestaltet bzw. weisen jeweils die gleichen Komponenten auf. Aus Gründen der Übersichtlichkeit ist dies jedoch nur an zwei Umformungsstationen dargestellt.

Das Bezugszeichen 32 kennzeichnet eine Zuführeinrichtung wie einen Transportstern welche der Umformungseinrichtung 1 Kunststoffvorformlinge 10 zuführt und das Bezugszeichen 34 kennzeichnet eine Abführeinrichtung, welche die geblasenen Kunststoffbehältnisse bzw. Kunststoffflaschen 20 von der Umformungseinrichtung 1 abführt.

Die Umformungsstationen weisen jeweils eine Beaufschlagungseinrichtung 14, wie eine Blasdüse auf, welche die Kunststoffvorformlinge mit der Druckluft beaufschlagt. Das Bezugszeichen 12 kennzeichnet schematisch Blasform, innerhalb derer die Kunststoffvorformlinge umgeformt werden.

Das Bezugszeichen 8 kennzeichnet grob schematisch eine Messeinrichtung, genauer eine Druckerfassungseinrichtung, welche den Ist-(Luft)Druck (insbesondere innerhalb der zu expandierenden Behältnisse) erfasst. Das Bezugszeichen 16 kennzeichnet einen stangenartigen Körper bzw. eine Reckstange, welche die Kunststoffvorformlinge 10 in ihrer Längsrichtung dehnt Mittels der Messeinrichtung können die oben gezeigten Druckverlaufskurven aufgenommen werden

Das Bezugszeichen 26 kennzeichnet eine Glättungseinrichtung, welche die aufgenommenen Druckverlaufskurven bzw. die Bewegungsverlaufskurven glättet. Eine Prozessoreinrichtung 22 ermittelt aus den Verlaufskurven, wie oben erwähnt, die relevanten Prozesspunkte. Eine Steuerungseinrichtung 28 dient zum Ansteuern der einzelnen Ventileinrichtungen der Umformungsstationen.

In einer Speichereinrichtung 30 werden die ermittelten Prozesspunkte abgespeichert.

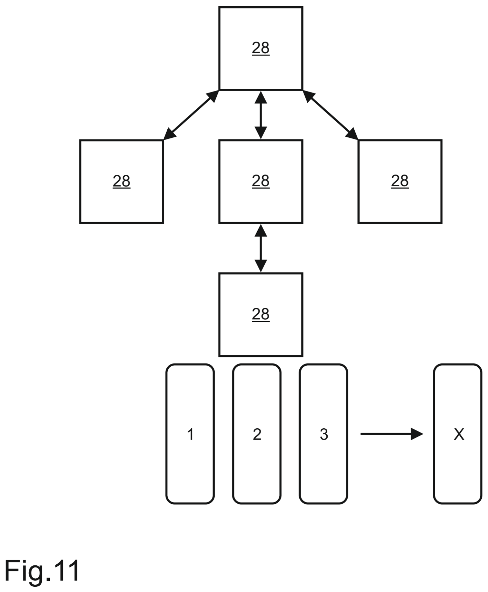

Figur 11 ist eine schematische Darstellung zur Verdeutlichung der Aufgaben der Steuerungseinrichtung 28. Bei der Steuerungseinrichtung 28 handelt es sich hier bevorzugt um eine zentrale Steuerungseinheit, insbesondere zur übergeordneten Steuerung der Blasmaschinenkomponenten.

Die Steuerungseinrichtung 28 steuert dabei bevorzugt eine Steuereinrichtung der Blasmaschine (SBC) zur Blaskurvenauswertung, insbesondere die Prozessoreinrichtung 22 an und/oder auch Steuerungseinrichtungen 24 für den Behältertransport (SDC) beispielsweise für die Positionserfassung der Behältnisse oder dergleichen. Bei den Steuereinrichtungen der Blasmaschine (SBC) handelt es sich bevorzugt um die Ansteuerung der Umformungsstationen 25n 1...X, der Blasformen mit Ventilblock und/oder der Reckeinheit.

Die Steuerungseinrichtung 28 steuert dabei beispielsweise auch eine der Zuführungseinrichtung 32 vorgeschaltete Heizeinrichtung 5. Bevorzugt steuert die Steuerungseinrichtung die Heizungssteller, Lampen, Heizeinrichtungen, Kühlungseinrichtungen, etc. der Heizeinrichtung 5.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Umformen von Kunststoffvorformlingen zu Kunststoffbehältnissen wobei ein Kunststoffvorformling in eine Blasform eingebracht wird und durch Beaufschlagung mit einem fließfähigen Medium zu einem Kunststoffbehältnis expandiert wird, wobei der Kunststoffvorformling mit wenigstens zwei unterschiedlichen Druckniveaus (P1, Pi, P2) beaufschlagt wird und wobei weiterhin bevorzugt in den Kunststoffvorformling ein stangenartiger Körper eingeführt wird, um den Kunststoffvorformling in seiner Längsrichtung (L) zu dehnen, wobei mittels mindestens einer Messeinrichtung während des Expansionsvorgangs eine Druckverlaufskurve und/oder eine Bewegungsverlaufskurve des stangenartigen Körpers und/oder ein Kraftverlauf des stangenartigen Körpers bestimmt wird,
**dadurch gekennzeichnet, dass**
mittels einer Prozessoreinrichtung wenigstens eine der Kurven ausgewertet wird und wenigstens ein für den Verlauf charakteristischer Punkt oder Bereich dieser Verlaufskurve ermittelt wird.

2. Verfahren nach Anspruch 1,
**dadurch gekennzeichnet, dass**
dieser charakteristische Punkt oder Bereich aus einer Gruppe von Punkten oder Bereichen ausgewählt ist, welche Extrema oder Extremabereiche der Druckverlaufskurve oder Bewegungsverlaufskurve, Wendepunkte oder Wendepunktsbereiche der Druckverlaufskurve oder Bewegungsverlaufskurve und dergleichen enthält.

3. Verfahren nach wenigstens einem der vorangegangenen Ansprüche,
**dadurch gekennzeichnet, dass**
der Kunststoffvorformling während seiner Expansion entlang eines vorgegebenen Transportpfads transportiert wird.

4. Verfahren nach wenigstens einem der vorangegangenen Ansprüche,
**dadurch gekennzeichnet, dass**
die Verlaufskurve in Abhängigkeit von der Zeit und/oder in Abhängigkeit von einer Position des Kunststoffvorformlings aufgenommen wird.

5. Verfahren nach wenigstens einem der vorangegangenen Ansprüche,
**dadurch gekennzeichnet, dass**
wenigstens zwei, bevorzugt wenigstens drei und bevorzugt wenigstens vier charakteristische Punkte des Verlaufs ermittelt werden.

6. Verfahren nach wenigstens einem der vorangegangenen Ansprüche,
**dadurch gekennzeichnet, dass**
die Verlaufskurve mittels eines Kurvendiskussionsverfahrens ausgewertet wird.

7. Verfahren nach wenigstens einem der vorangegangenen Ansprüche,
**dadurch gekennzeichnet, dass**
eine Vielzahl von Kunststoffvorformlingen mittels einer Vielzahl von Umformungsstationen zu den Kunststoffbehältnissen umgeformt werden und bevorzugt für jede dieser Umformungsstationen wenigstens ein charakteristischer Punkt ermittelt wird.

8. Verfahren nach wenigstens einem der vorangegangenen Ansprüche,
**dadurch gekennzeichnet, dass**
n-Tupel aus mehreren charakteristischen Punkten gebildet werden und diese n-Tupel bevorzugt in einer Speichereinrichtung und/oder einer Cloud abgespeichert werden.

9. Verfahren nach wenigstens einem der vorangegangenen Ansprüche,
**dadurch gekennzeichnet, dass**
die Druckbeaufschlagung der Behältnisse mittels wenigstens einer steuerbaren Ventileinrichtung gesteuert wird und bevorzugt diese Ventileinrichtung unter Berücksichtigung der ermittelten Punkte und/oder Bereiche gesteuert wird.

10. Verfahren nach wenigstens einem der vorangegangenen Ansprüche,
**dadurch gekennzeichnet, dass**
mit jedem Prozesspunkt und/oder Prozessbereich Daten verknüpft werden, welche insbesondere Rückschluss auf die betreffende Umformungsstation oder auch einen Rückschluss auf entsprechend verwendete Blasparameter ermöglichen.

11. Verfahren nach dem vorangegangenen Anspruch,
**dadurch gekennzeichnet, dass**
die charakterisierenden Daten aus einer Gruppe von Daten ausgewählt sind, welche eine Gültigkeit des Punktes einen Zeitpunkt, einen Druck an diesem Prozesspunkt, eine Position der Reckstange an diesem Prozesspunkt, eine Kraft einer Antriebseinrichtung einer Reckstange an diesem Prozesspunkt und/oder eine Verzögerungszeit enthält.

12. Verfahren nach wenigstens einem der vorangegangenen Ansprüche,
**dadurch gekennzeichnet, dass**
mittels einer mathematischen Auswertung der aufgezeichneten Blaskurven und/oder Druckverlaufskurven oder Bewegungsverlaufskurven markante Prozesspunkte ermittelt werden.

13. Verfahren nach Anspruch 12,
**dadurch gekennzeichnet, dass**
die markanten Prozesspunkte zum Zweck einer Prozessregelung oder predictive maintenance und einer Ableitung von Abhängigkeiten im Prozess verwendet werden.

14. Verfahren nach wenigstens einem der vorangegangenen Ansprüche,
**dadurch gekennzeichnet, dass**
für eine bestimmte Umformungsstation eine große Menge an Daten aufgenommen wird und diese Datenmenge abgespeichert wird und auf Basis einer Auswertung dieser Datenmenge die entsprechende Umformungsstation ausgewertet wird, so dass auf Basis dieser Werte ein zukünftiges Verhalten einer betreffenden Umformungsstation prognostiziert wird.

15. Vorrichtung (1) zum Umformen von Kunststoffvorformlingen (10) zu Kunststoffbehältnissen (20) mit wenigstens einer Umformungsstation (25), welche eine Blasform (12) aufweist, in welche der Kunststoffvorformling (10) einbringbar ist sowie eine Beaufschlagungseinrichtung (14), welche den Kunststoffvorformling (10) mit einem fließfähigen und insbesondere gasförmigen Medium beaufschlagt, wobei der Kunststoffvorformling (10) mit wenigstens zwei unterschiedlichen Druckniveaus (P1, Pi, P2) beaufschlagt wird und wobei die Vorrichtung (1) weiterhin bevorzugt einen in den Kunststoffvorformling einführbaren stangenartiger Körper (16) aufweist, um den Kunststoffvorformling in seiner Längsrichtung (L) zu dehnen, wobei mittels einer Messeinrichtung (8) während des Expansionsvorgangs eine Druckverlaufskurve (BI) und/oder eine Bewegungsverlaufskurve (PR) des stangenartigen Körpers (16) und/oder ein Kraftverlauf des stangenartigen Körpers bestimmt wird ,
**dadurch gekennzeichnet, dass**
die Vorrichtung eine Prozessoreinrichtung (22) aufweist, welche dazu geeignet und bestimmt ist wenigstens eine der Verlaufskurven (BI, PR) auszuwerten und wenigstens einen für den Verlauf charakteristischen Punkt oder Bereich dieser Verlaufskurve (BI, PR) zu ermitteln.

16. Vorrichtung nach dem vorangegangenen Anspruch,
**dadurch gekennzeichnet, dass**
die Vorrichtung eine Speichereinrichtung (24) und/oder eine Cloud aufweist, welche dazu geeignet und bestimmt ist, eine Vielzahl von charakteristischen Punkten gemeinsam mit für diesen charakteristischen Daten abzuspeichern.

17. Vorrichtung nach wenigstens einem der vorangegangenen Ansprüche,
**dadurch gekennzeichnet, dass**
die Vorrichtung eine Vielzahl von Umformungsstationen aufweist.

18. Vorrichtung nach wenigstens einem der vorangegangenen Ansprüche,
**dadurch gekennzeichnet, dass**
die Vorrichtung eine Transporteinrichtung (2) aufweist, welche die Kunststoffvorformlinge während deren Expansion transportiert.
